# EUROPÄISCHE PATENTSCHRIFT

(11) **EP 0 777 035 B1**
(45) Veröffentlichungstag und Bekanntmachung des Hinweises auf die Patenterteilung: **09.07.2003**
(21) Anmeldenummer: 96810740.9
(22) Anmeldetag: 06.11.1996
(51) Int. Cl.: F01K 23/10, F22B 1/18

(54) **Verfahren zum Anfahren eines Mehrdruckkessel**
Method for starting a multiple pressure boiler
Procédé pour démarrer une chaudière à pressions multiples

(30) Priorität: 28.11.1995 DE 19544226
(43) Veröffentlichungstag der Anmeldung: 04.06.1997
(73) Patentinhaber: ALSTOM (Switzerland) Ltd, 5401 Baden (CH)
(72) Erfinder: Liebig, Erhard, Dr., 71254 Ditzingen (DE); Ruchti, Christian, Dr., 8610 Uster (CH)

(56) Entgegenhaltungen:
- EP-A- 0 359 735
- EP-A- 0 561 220

## Beschreibung

### Technisches Gebiet

Die Erfindung betrifft ein Verfahren zum Anfahren eines gasbeheizten Mehrdruckabhitzekessel mit mindestens einem Umlaufdampferzeuger, im wesentlichen bestehend aus einem Niederdruckeconomiser, einer Niederdrucktrommel und einem Niederdruckverdampfer und mindestens einem Zwangsdurchlaufdampferzeuger, im wesentlichen bestehend aus einem Hochdruckeconomiser, einem Hochdruckverdampfer und einem Hochdrucküberhitzer.

### Stand der Technik

Ein derartiger gasbeheizter Mehrdruck-Abhitzekessel ist bekannt aus der DE-A-41 26 631. Er besteht im wesentlichen aus einem Umlaufdampferzeuger in der Niederdruckstufe und einem Benson-Verdampfer in der Mitteldruck-und Hochdruckstufe. Der Benson-Verdampfer der Hochdruckstufe besteht dabei aus zwei im Gleichstrom mit dem Gasstrom geführten Teilen mit unterschiedlich umgesetzten Wärmen. Dadurch sollen stabile Strömungsverhältnisse in Parallelrohren des Benson-Verdampfers vorliegen. Zudem wird in EP-A-0 561 220 ein Verfahren zum Betreiben einen Anlage zur Dampferzengung beschrieben.

### Darstellung der Erfindung

Der Erfindung liegt die Aufgabe zugrunde, ein Verfahren zum Anfahren einer Anlage der eingangs genannten Art zu schaffen, das grösstmögliche Flexibilität in der Fahrweise gestattet.

Erfindungsgemäss wird dies dadurch erreicht, dass beim Anfahren bis zum Erreichen von überhitzten Bedingungen am Austritt des Hochdruckverdampfers Hochdrucksattwasser über die Abscheideflasche in die Trommel des Umlaufdampferzeugers rezirkuliert wird.

Die Vorteile der Erfindung sind unter anderem darin zu sehen, dass durch die Nutzung der Dampftrommel des Umlaufdampferzeugers als Speisewasserbehälter für den Durchlaufdampferzeuger auf einen separaten Speisewasserbehälter verzichtet werden kann. Weiter ist durch die Abscheideflasche die stetige Überhitzung des Frischdampfes garantiert und Wasserdurchbrüche sind ausgeschlossen.

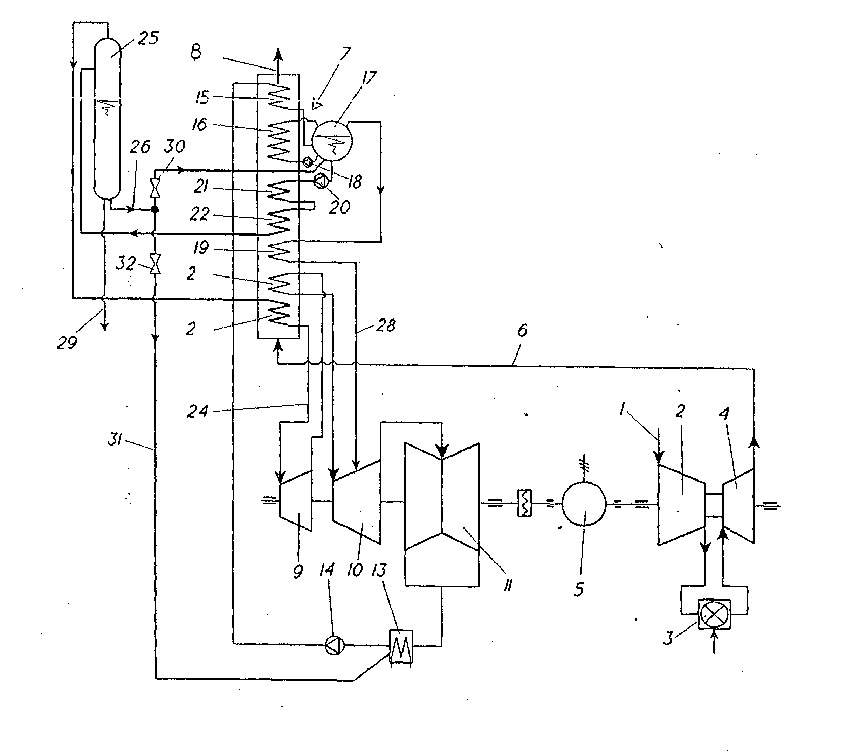

### Kurze Beschreibung der Zeichnung

In der Zeichnung ist ein Ausführungsbeispiel der Erfindung anhand einer kombinierten Gas-Dampf-Kraftwerksanlage schematisch dargestellt. Es sind nur die für das Verständnis der Erfindung wesentlichen Elemente gezeigt. Die Strömungsrichtung der Arbeitsmittel ist mit Pfeilen dargestellt.

### Weg zur Ausführung der Erfindung

Gemäss der einzigen Figur wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme,über eine Leitung 8 und einen nicht dargestellten Kamin ins Freie geleitet.

Im Wasser-Dampfkreislauf ist eine mehrgehäusige Dampfturbine 9, 10 und 11 auf der gleichen Welle mit der Gasturbine angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert. Bemerkenswert ist, dass die Anlage keine, in der Regel entnahmedampfbeheizte Niederdruckvorwärmer, Speisewasserbehälter und Hochdruckvorwärmer aufweist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen.

Das Niederdrucksystem ist als Umlaufssystem mit Trommel ausgeführt wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt.

Zur Phasentrennung ist eine Abscheideflasche 25 vorgesehen, in welche der Austritt des Hochdruckverdampfers 22 mündet. Die Abscheideflasche ist im Beispielsfall auf gleicher Höhe mit der Niederdrucktrommel angeordnet. Sie ist an ihrem oberen Ende mit dem Hochdrucküberhitzer 23 verbunden. An ihrem unteren Ende ist sie zusätzlich mit einer Abschlämmleitung 29 versehen. Vom unteren Ende der Abscheideflasche geht ebenfalls eine Rezirkulationsleitung 26 ab, welche ein Absperrorgan 30 enthält und in die Niederdrucktrommel 17 mündet. Von dieser Rezirkulationsleitung zweigt eine weitere Wasserleitung 31 ab, welche zum Kondensator 13 führt. Auch in dieser Wasserleitung ist ein Absperrorgan 32 vorgesehen.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Durch Variation der Drücke und Massenströme im Umlaufsystem und im Durchlaufsystem kann mit einem solchen Dampferzeuger ein weiter Bereich von Kombiprozessen abgedeckt werden.

Nachstehend ist die Funktionsweise der im Gleitdruckverfahren arbeitenden Anlage erläutert. Zugrundegelegt wird ein Kessel mit einer sinnvollen Aufteilung der Massenströme im Niederdrucksystem und im Hochdrucksystem im Verhältnis von 1:4 bezw. 1:5.

Beim Anfahren werden bis auf die jeweiligen Überhitzer 19, 23 und den Zwischenüberhitzer 27 zunächst das Niederdruckumlaufsystem und das Hochdruckdurchlaufsystem mit Wasser gefüllt. Über die Umwälzpumpe 18 wird die Zirkulation im Niederdrucksystem sichergestellt. Über die geodätische Höhe, die Druckdifferenz sowie die Pumpen wird ebenfalls ein Umlauf im Hochdrucksystem über die Abscheideflasche und die Rezirkulationsleitung 26 in die Niederdrucktrommel sichergestellt.

Danach wird die Gasturbine angefahren. Deren Abgase werden in den Dampferzeuger geleitet und heizen dort das in den Wärmetauschflächen zirkulierende Wasser auf. Durch die Rezirkulation wird bis zum Erreichen überhitzter Bedingungen am Austritt des Hochdruckverdampfers 22 Wärme vom Hochdruckdurchlaufsystem in die Trommel des Niederdruckumlaufsytems geleitet. Hierdurch wird erreicht, dass während des Anfahrens die Wärme im Bereich des Kessels gehalten wird. Nachdem somit keine Wärmeabgabe über ein Kühlsystem an die Umgebung erforderlich ist, garantiert dieses Vorgehen ein sehr wirtschaftliches Anfahren.

Mit dem Erreichen der jeweiligen Siedetemperaturen beginnt im Kessel die Dampfproduktion. Der erste Dampf im Niederdruck-- sytem wird durch Entspannung von rezirkuliertem Hochdruck-Sattwassers aus der Abscheideflasche erzeugt. Somit steht in der Niederdrucktrommel der für die Labyrinthe der Dampfturbine erforderliche Sperrdampf und der für das Vakuumziehen im Kondensator erforderliche Ejektordampf frühzeitig zur Verfügung.

Die Abscheidefasche sorgt dafür, dass der Hochdrucküberhitzer jederzeit trocken bleibt und am Kesselaustritt frühzeitig überhitzer Dampf zur Verfügung steht. Sobald im Hochdruckverdampfer der für einen stabilen Betrieb notwendige Druck erreicht ist, kann der Frischdampf zum Anfahren der Dampfturbine im Gleitdruckbetrieb verwendet werden.

Durch Variation der Drücke im Niederdruckumlauf- und im Hochdruckdurchlaufsystem sowie des Rezirkulationsmassenstromes zum Anfahrbeginn lässt sich der Zeitpunkt des Beginns der Dampferzeugung und die Dampfparameter wie Druck, Temperatur und Massenstrom je nach den konkreten Bedingungen der Anlage beeinflussen. Dieses Vorgehen garantiert eine hohe Flexibilität Bein Anfahren.

Die Regelung erfolgt ausschliesslich über die drehzahlgeregelte Speisepumpe, wobei die Frischdampftemperatur über den Massenstrom eingestellt wird. Selbstverständlich kann die Speisepumpe genau so gut mit konstanter Drehzahl betrieben werden nit anschliessender Drosselung des Speisewassers auf den gewünschten Druck.

Das beschriebene Anfahrverfahren eignet sich besonders zum Warmstart der Anlage.

Bei einem Kaltstart liegen die Verhältnisse anders. Hier gilt es, Wasser- und Feuchtedurchbrüche zur Turbine hin zu verhindern. In der Regel zirkuliert bei einem Kaltstart das Speisewasser zumindest teilweise um die Speisepumpe 20 herum. Infolge Drosselung stromabwärts der Speisepumpe, Druckverlusten in den Rohrleitungen und Armaturen sowie ggfs. geöffneter Abschlämmleitung 29 wird der Druck in der Abscheideflasche zu niedrig sein, um eine Rezirkulation zur Niederdrucktrommel zu gewährleisten. Zu beachten ist ferner die Tatsache, dass Sattwasser bei einer Druckabsenkung ausdampft, was zu Erosion und Wasserschlägen führen kann. Abhilfe schafft hier die Massnahme, dass das Rezirkulationswasser zumindest teilweise so lange abgeführt wird, bis überhitzte Bedingungen am Austritt des Hochdruckverdampfers 22 erreicht sind. Das aus der Abscheideflasche umgewälzte Wasser kann z.B. über die Wasserleitung 31 direkt in den Kondensator 13 geführt werden oder aber über die Abschlämmleitung 29 verworfen werden. Letzeres wird man insbesondere bei einem Kaltstart nach einem längeren Stillstand durchführen, wenn an der Wasserqualität Zweifel angebracht sind.

Erst mit beginnender Dampfproduktion wird der Druck in der Abscheideflasche 25 ansteigen. Bei normalem Wasserstand in der Abscheideflasche und bei genügender Druckdifferenz. d.h. mindestens 3 bar, zwischen Abscheideflasche und Niederdrucktrommel 17 wird das Hochdruck-Sattwasser aus der Abscheideflasche nur mit Hilfe dieser Druckdifferenz in die Trommel des Umlauf dampferzeugers rezirkuliert. Diese Verfahrensvariante hat den Vorteil, dass auf eine Förderpumpe oder auf den geodätischen Höhenunterschied zwischen dem Wasserniveau in der Abscheideflasche und jenem in der Niederdrucktrommel verzichtet werden kann. Dieser geodätische Höhenunterschied führt nämlich zu Anordnungszwängen, insbesondere zu einem speziellen Kesselgerüst, was sich negativ auf die Investionen auswirkt.

Auch bei hohem Wasserstandin der Abscheideflasche 25 - was bei einen niedrigen Druck der Fall sein kann, oder bei einer zu geringen Druckdifferenz für die Rezirkulation, oder bei zu hoheme Feuchteeintrag - wird man mit Vorteil zunächst das Rezirkulationswasser ableiten, bis eine genügend grosse-Druckdifferenz für die Rezirkulation vorhanden ist oder bis überhitzte Bedingungen am Austritt des Hochdruckverdampfers 22 erreicht sind und es erst dann in die Niederdrucktrommel leiten.

Als Grundregel kann gelten, dass zwecks schnellen Anfahrens oder hoher Energieausnutzung so viel wie möglich Wasser aus der Abscheideflasche 25 in die Niederdrucktrommel 17 rezirkuliert wird.

Selbstverständlich ist die Erfindung nicht auf das gezeigte und beschriebene Ausführungsbeispiel beschränkt. So sind auch Mehrdruckprozesse denkbar, wobei die im Zwangsdurchlauf arbeitenden Druckstufen jeweils aus den Trommeln der Umlaufsysteme angespeist werden. In Abweichung zum erwähnten Zwangsumlauf des Niederdrucksystemes kann selbstverständlich genau so gut ein Naturumlaufsystem zur Anwendung gelangen. Die Erfindung ist desweiteren nicht an das Vorhandensein von Überhitzern und Zwischenüberhitzern gebunden. In Abweichung zu den beschriebenen Lösungen, gemäss denen die geodätische Höhe oder die Druckdifferenz für die Rezirkulation aus der Abscheideflasche in die Niederdrucktrommel benutzt werden, kann es angebracht sein, hierzu eine separate Umwälzpumpe vorzusehen.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Mitteldruckturbine
- 11: Niederdruckturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Hochdruckspeisewasserpumpe
- 21: Hochdruckeconomiser
- 22: Hochdruckverdampfer
- 23: Hochdrucküberhitzer
- 24: Frischdampfleitung
- 25: Abscheideflasche
- 26: Rezirkulationsleitung
- 27: Zwischenüberhitzer
- 28: Niederdruck-Dampfleitung
- 29: Abschlämmleitung
- 30: Absperrorgan
- 31: Wasserleitung
- 32: Absperrorgan

## Patentansprüche

1. Verfahren zum Anfahren eines gasbeheizten Mehrdruckabhitzekessels (7) mit mindestens einem, eine Niederdrucktrommel (17) aufweisenden Umlaufdampferzeuger und mindestens einem Zwangsdurchlaufdampferzeuger, im wesentlichen bestehend aus einem Hochdruckeconomiser (21), einem Hochdruckverdampfer (22) und einem Hockdrucküberhitzer (23), welcher eine nachgeordnete, einen Kondensator (13) aufweisende Dampfturbinenanlage (9,10,11) mit Dampf versorgt, wobei der Hochdruckeconomiser (21) über eine Hochdruckspeisepumpe (20) aus der Dampftrommel (17) des Umlaufdampferzeugers angespeist wird, wobei das Arbeitsmittel aus dem Hochdruckverdampfer (22) in eine Abscheideflasche (25) geführt wird, welche über eine absperrbare Rezirkulationsleitung (26) mit der Dampftrommel (17) verbunden ist,
**dadurch gekennzeichnet, dass**
bis zum Erreichen von überhitzten Bedingungen am Austritt des Hochdruckverdampfers (22) Hochdrucksattwasser über die Abscheideflasche (25) in die Trommel (17) des Umlaufdampferzeugers rezirkuliert wird.

2. Verfahren nach Anspruch 1, **dadurch gekennzeichnet, dass** bei normalem Wasserstand in der Abscheideflasche (25) und bei genügender Druckdifferenz zwischen Abscheideflasche (25) und Niederdrucktrommel (17) Hochdrucksattwasser über die Abscheideflasche (25) in die Trommel (17) des Umlaufdampferzeugers nur mit Hilfe der Druckdifferenz rezirkuliert wird.

3. Verfahren nach Anspruch 1, **dadurch gekennzeichnet, dass** bei ungenügender Druckdifferenz zwischen Abscheideflasche (25) und Niederdrucktrommel (17) anlässlich eines Kaltstarts und/oder bei hohem Wasserstand in der Abscheideflasche (25) Rezirkulationswasser so lange abgeführt wird, bis eine ausreichende Druckdifferenz vorliegt, beziehungsweise bis der Wasserstand auf den Normalwert herabgesetzt ist oder sogar überhitzte Bedingungen am Austritt des Hochdruckverdampfers (22) erreicht sind.

## Claims

1. Method for starting a gas-heated mixed-pressure waste-heat boiler (7) with at least one forced-circulation steam generator comprising a low-pressure drum (17) and with at least one once-through forced-flow steam generator, essentially composed of a high-pressure economizer (21), of a high-pressure evaporator (22) and of a high-pressure superheater (23), which supplies steam to a following steam turbine plant (9,10,11) having a condenser (13), the high-pressure economizer (21) being fed from the steam drum (17) of the forced-circulation steam generator, the working medium being led out of the high-pressure evaporator (22) into a separation bottle (25) which is connected to the steam drum (17) via a recirculation line (26) capable of being shut off, **characterized in that** until superheated conditions are reached at the outlet of the high-pressure evaporator (22), high-pressure saturated water is recirculated into the drum (17) of the forced-circulation steam generator via the separation bottle (25).

2. Method according to Claim 1, **characterized in that**, if there is a normal water level in the separation bottle (25) and if there is a sufficient pressure difference between the separation bottle (25) and low-pressure drum (17), high-pressure saturated water is recirculated via the separation bottle (25) into the drum (17) of the forced-circulation steam generator solely by means of the pressure difference.

3. Method according to Claim 1, **characterized in that**, if there is an insufficient pressure difference between the separation bottle (25) and low-pressure drum (17), on the occasion of cold starting and/or if the water level in the separation bottle (25) is too high, recirculation water is discharged until there is a sufficient pressure difference or until the water level is reduced to the normal value or even superheated conditions are reached at the outlet of the high-pressure evaporator (22).

## Revendications

1. Procédé de démarrage d'une chaudière à pressions multiples chauffée au gaz (7) comprenant au moins un générateur de vapeur à circulation présentant un tambour à basse pression (17) et au moins un générateur de vapeur à transition forcée, consistant substantiellement en un économiseur à haute pression (21), un évaporateur à haute pression (22) et un surchauffeur à haute pression (23), qui alimente en vapeur une installation de turbine à vapeur adjointe (9, 10, 11) présentant un condensateur (13), l'économiseur à haute pression (21) étant alimenté par l'intermédiaire d'une pompe d'alimentation à haute pression (20) à partir du tambour à vapeur (17) du générateur de vapeur à circulation, la substance de travail étant guidée à partir de l'évaporateur à haute pression (22) dans une bouteille de séparation (25) qui est reliée par l'intermédiaire d'une conduite de recirculation pouvant être fermée (26) au tambour à vapeur (17),
**caractérisé en ce que**
jusqu'à l'atteinte de conditions de surchauffe à la sortie de l'évaporateur à haute pression (22), de l'eau saturée à haute pression est recyclée par la bouteille de séparation (25) dans le tambour (17) du générateur de vapeur à circulation.

2. Procédé selon la revendication 1, **caractérisé en ce qu'**avec un niveau d'eau normal dans la bouteille de séparation (25) et une différence de pression suffisante entre la bouteille de séparation (25) et le tambour à basse pression (17), de l'eau saturée à haute pression est recyclée par la bouteille de séparation (25) dans le tambour (17) du générateur de vapeur à circulation seulement à l'aide de la différence de pression.

3. Procédé selon la revendication 1, **caractérisé en ce qu'**en cas de différence de pression insuffisante entre la bouteille de séparation (25) et le tambour à basse pression (17) à l'occasion d'un démarrage à froid et/ou en cas de niveau d'eau élevé dans la bouteille de séparation (25), de l'eau de recirculation est évacuée jusqu'à ce qu'il y ait une différence de pression suffisante, ou que le niveau d'eau se soit abaissé à la valeur normale ou même que des conditions de surchauffe soient atteintes à la sortie de l'évaporateur à haute pression (22).
